# EUROPEAN PATENT APPLICATION

(11) **EP 1 431 754 A2**
(43) Date of publication of application: **23.06.2004**
(21) Application number: 03078669.3
(22) Date of filing: 21.11.2003
(51) Int. Cl.: G01N 25/72

(54) **Thermographic system and method using ohmic heating of the test part by applying an electric current through the test part itself**

(30) Priority: 19.12.2002 US 322512
(71) Applicant: The Boeing Company, Seattle, Washington 98124-2207 (US)
(72) Inventor: Kennedy, James C., Renton Washington 98059 (US); Uyehara, Clyde T., Kent Washington 98031 (US); Thompson, Jeffrey G., Kent Washington 98042 (US)
(74) Representative: Land, Addick Adrianus Gosling

(57) **Abstract**

A system and method for verifying conductive paths in test parts and for testing the conductive paths for flaws subjects the test part to a current flow from one location to another via conduction. Sites containing dislocations cause a concentration of current around them which results in increased ohmic heating which can be detected with an infrared camera.

## Description

### FIELD OF THE INVENTION

The present invention relates generally to field of non-destructive testing. More particularly, the present invention relates to systems and methods for using current flow thermography to detect features of metal and electrically conductive composite structures including, but not limited to, conductive paths, flaws, damage, and heat sinks.

### BACKGROUND OF THE INVENTION

Destructive testing of products typically involves taking a product and subjecting it to rigorous mechanical testing to determine the quality of product's construction. In this form of testing, many features of the product can be tested such as defects in metal structures, integrity of welds, and corrosion on internal surfaces and internal to the structures themselves.

Destructive testing regimes ordinarily result in the subject product being destroyed and therefore no longer useful for its original purposes. Because of this, the use of destructive testing is limited to applications where a sampling of products can be tested to determine characteristics and features of a much larger quantity of products, for example by selecting every one-hundredth product on an assembly line for destructive testing.

Because many large-scale products require that each product be tested to ensure that certain standards are met, both at the time of manufacture and on an on-going basis during their service life, destructive testing is not always appropriate. As a result, many techniques for performing non-destructive testing have been developed. Non-destructive testing techniques have been developed as a cost-effective mechanism for testing for the existence of desired features in products. Such techniques are employed in a wide range of applications such as products composed of metal pieces joined by welding. Other applications for such techniques are in testing products for damage or deterioration of metal or conductive components.

In the field of aircraft manufacturing and testing, for example, it is common to use a composite structure such as graphite, for the outer skin of an aircraft to reduce weight and thereby reduce fuel consumption. One drawback to composite materials is that they are not conductive and thus, do not allow energy to dissipate in the event of a lightning strike. Some solutions to this problem utilize a metallic mesh bonded to the composite structure to allow for dissipation of electrical energy from lightning strikes.

To serve the functions of dissipating electrical energy from lightning strikes, and preventing associated damage to the composite skin structure, the conductive mesh material of a section of composite skin structure preferably must not contain discontinuities, such as cracks or other damage, must be adequately bonded to the underlying composite structure, without areas of delamination, and must be adequately bonded or welded to adjoining composite skin structures.

A number of non-destructive testing techniques using thermal imaging have been developed for testing many of the above features. In these systems, a source of heat energy is applied to a structure to be tested and an infrared camera is used to detect defects such as delaminations and disbonds.

For example, United States Patent No. 3,020,745 describes a method of detecting subsurface voids in a longitudinal a pipe weld seam which utilizes an infrared detector to detect anomalies in the heat generated at the site of the weld. As the pipe is moved past the infrared detector, eddy currents are formed in the area of the weld using an induction heating coil to cause localized heating at the weld site. The detector is raster scanned across weld and the output of the detector is fed to an oscilloscope for displaying the level of infrared energy detected. Where subsurface voids exist, a small concentration of heat will exist and will be identified through the oscilloscope display.

In United States Patent No. 5,709,469 a process is described for testing composite repairs on aircraft using thermal imaging. Heat is applied to a composite patch bond with a heat lamp and then allowed to cool for a period of time. A thermal imager is utilized to detect anomalies in the cooling of the composite patch thereby identify delaminations and disbands.

In United States Patent No. 5,562,345 a process is described wherein a magnetic induction/eddy current generator heats a region of a test surface. A thermal detector is used to detect the temperature change as a function of time and a computer compares these results with that of a test structure to determine if defects exist in the structure.

United States Patent No. 6,111,424 describes a process for testing flat panel displays. In this process a uniform voltage is applied across all of the pixels of the plate and an infrared camera is used to detect non-uniform areas of heating to thereby detect defects in the plate.

United States Patent No. 6,399,949 describes a process for detecting areas of debonding a rubber coating from a metal core in rubber coated rolls. In this process, the metal core is heated using an induction heating technique and an infrared camera is then used to view the thermal transient of the rubber coating. Areas of non-uniform heating denote areas of debonding of the rubber coating from the metal core.

Further, in the article Thermographic Detection of Cracks in Thin Sheets, K. Elliott Cramer, et al., Review of Progress in Quantitative Nondestructive Evaluation, Vol. 10A, 1991, a process is described for detecting cracks in then metal sheets. In the process described, a quartz lamp is utilized to apply heat to the sample to be tested. Thermal imaging is used to detect the temperature profiles of the metal sheet. A filtering of the detected images is described in order to improve the contrast due to the presence of cracks in the sheets.

While the foregoing systems represent improvements in the field of non-destructive testing, improvements can still be made. In particular, the techniques described above utilize heating techniques and/or thermal imaging techniques that require considerable time for the heating process, are limited to testing either for heating or cooling but not both, are limited in the types of defects they can detect, or can only be utilized over a small surface area. As a result, use of these techniques for testing a large-scale product, for example, a section of an airplane wing, would be time consuming.

Accordingly, it is desirable that additional systems and methods be developed that allow for rapid testing of large test structures with numerous test results including, for example, delaminations, cracks, disbonds, corrosion, impact damage, weld integrity, heat sinks. It is also desirable that these systems and methods be useful for in-service testing using existing service equipment at least to some extent.

### SUMMARY OF THE INVENTION

The foregoing needs are met, to a great extent, by the present invention, wherein in one aspect an apparatus is provided that in some embodiments utilizes ohmic heating of a test part by applying a current through the test part. By providing a high current through the test part, rapid localized heating of the part occurs in the presence of certain defects such as around a crack. Cold shadows will occur in the presence of discontinuities in a conductive mesh such as those resulting from corrosion, impact damage and flawed welding at mesh seams. The present invention also permits the detection of delaminations in a test part by heating the part through ohmic heating and then viewing the thermal image of the test part as it cools.

In accordance with one aspect of the invention, a system for detecting thermal anomalies in a test part is provided having a first contact secured at a first location on the test part and second contact secured at a second location on the test part. The system also includes a current source for providing a current between the first and said second contacts through said test part. A camera detects a thermal image of the test part.

In another aspect of the invention, a system for detecting thermal anomalies in a test part is provided having a first contact secured at a first location on a test part and a second contact secured at a second location on a test part. The system also includes a current supply means for providing a current between said first and said second contacts through said test part. A detecting means is provided for detecting a thermal image of the test part.

In yet another embodiment, a method of detecting thermal anomalies in a test part is provided wherein an electrical current is passed through a test part to cause ohmic heating of the test part. A thermal image of the test part is then detected.

There has thus been outlined, rather broadly, certain embodiments of the invention in order that the detailed description thereof may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWING

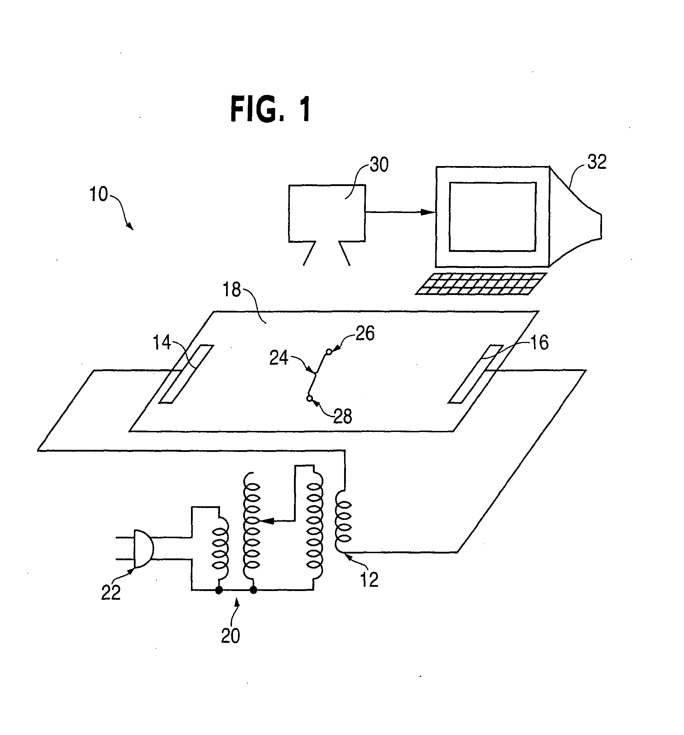

FIG. 1 is an illustration of a system for non-destructive testing using current flow thermography in accordance with a preferred embodiment of the present invention.

### DETAILED DESCRIPTION OF THE INVENTION

An embodiment in accordance with the present invention provides a system and method for verifying conductive paths in test parts and for testing the conductive paths for flaws. In the system and method a conductive test part is subjected to a current flow from one location to another via conduction. Sites containing dislocations cause a concentration of current around them which results in increased ohmic heating which can be detected with an infrared camera. For bulky parts, alternating current can be used which will concentrate the current flow near the surface of the conductive material where the flaws are most likely to exist.

Two different methods of detection are possible. The first is the detection of flaws immediately upon starting the current due to the increased heating around them. The second is the detection of delaminations in a composite part with an internal conductive layer by heating the conductive layer with a current, removing the current, and taking images over a specified time interval. Areas of delamination will take longer to cool because of the poorer thermal conductivity from the electrically conductive layer to the surface of the part.

The system and method of the present invention provide rapid identification of flaws over a large area in a conductive test part. The system and method also provide for non-destructive testing of a wide variety of features.

Illustrated in FIG. 1 is a non-destructive test system 10 in accordance with a preferred embodiment of the present invention. The system includes a current transformer 12 for generating a current flow between a first contact 14 and a second contact 16 secured to a test part 18. In a preferred embodiment, the contacts are copper stripping secured to the test part with bolts through conductive holes in the test part 18. In order to adjust the current generated by the transformer 12, a variac 20 is provided at the input to the transformer 12. The variac 20 converts an input supply 22 voltage to an output supply to the transformer 12.

As current flows through the test part 18, generally uniform ohmic heating occurs in the test part 18. At sites where flaws in the test part 18 exist, such as a crack 24, the current flow is disrupted causing localized areas of high current flow 26, 28. In these areas, a localized temperature rise exists which can be observed with a thermal camera 30. The output of thermal camera 30, typically an infrared camera, can be provided to a display device 32, such as a computer, so that a real time image of the test part 18 can be viewed and the flaws directly identified.

In an embodiment of the system, the input supply 22 that drives the transformer is an ordinary 110 volt rms alternating current supply. Alternatively, by appropriate selection of the variac 20 and current transformer 12, the system can be configured to operate using any input supply 22.

In a preferred embodiment of the invention, the output of the current transformer is a seven ampere, two volt, sixty hertz supply. In utilizing an alternating current, the current flow will be concentrated near the surface of the conductive material where flaws are most likely to exist. Where a direct current supply is desired, this can be achieved by utilizing a direct current supply 22 or by employing a suitable conversion device such as a rectifying bridge circuit.

.. It should be recognized that the seven ampere current is exemplary and that suitable current levels for testing different types of test parts can be readily determined by those of ordinary skill. The current supply should be high enough to cause rapid ohmic heating so that localized areas of increase heat, i.e., hot spots, and lower heat, i.e., cold shadows, can be identified.

A particularly suitable application for the system and method of the present invention is in testing composite skin structures of airplanes. These composite skin structures typically contain a conductive mesh, such as an expanded aluminum mesh, that is laminated over a non-conductive graphite core. The conductive mesh serves to distribute the voltage, and thus the heat, of lightning strikes over a wide surface area of the airplane thus reducing the likelihood of localized damage to the composite skin structure from the lightning strike.

In order to test a segment of the composite skin structure the first and second contacts 14, 16 are secured to the segment of the airplane. In a preferred embodiment, the contacts are diverter strips or conductive fasteners provided on the composite skin structure. Cables are connected from the output of the transformer 12 to the conductive fasteners and the current is induced across the conductive mesh of the composite skin structure.

Due to the high current supply, ohmic heating of the conductive mesh occurs immediately. The sensitivity of commercially available thermal cameras, e.g., less than a tenth of a degree Celsius, permits almost immediate observation of defects in the mesh structure. Damage to the conductive mesh, caused by lightning strike, impact damage, corrosion, defects in welds, etc., causes a discontinuity in the current flow and thus appear as cold shadows in the thermal image.

Areas of delamination of the aluminum mesh from the graphite core can be identified by applying the current for a period of time and then observing the thermal image when the current is removed and as the part cools. Heat will dissipate more slowly in the areas of delamination, because it cannot be readily transferred to the underlying graphite layer, and thus will appear as hot spots on the thermal image.

In a preferred embodiment, the thermal camera 30 used is the ThermaCAM® SC1000 camera with a standard 25 millimeter lens, supplied by FLIR Systems, Inc., www.flir.com. The output of the thermal camera can be displayed in real-time on a computer 32 or other display device or can be recorded for later playback. In another embodiment of the invention, the raw output of the thermal camera can be recorded on video tape or can be captured by an image processing device.

Because the image provided is that of the entire section of the composite skin structure being tested, rather than simply an output level displayed on an oscilloscope, a large surface area can be tested and the location of the discontinuity can still be readily identified from the cold shadow.

In another embodiment of the invention, the camera assembly 30 includes an additional camera provided for capturing a visual image of the test part. Using off the shelf software such as for example, Adobe photoshop®, digital images captured from the thermal camera and visual camera can be overlayed on top of each other by making one of the images transparent. In a particularly preferred embodiment, the thermal camera can toggle between a thermal image and a visual image of the test part thereby making identification of defects in the part easier. The computer 32 also preferably includes software to overlay the thermal and/or visual images with a CAD drawing of the test part.

Alternatively, where a digital thermal image is obtained from the thermal camera, this can be overlayed, using the image processing device, onto a computer-aided design or other digital drawing of the test part.

Another suitable application for the system of the present invention is for locating cracks in a metal sheet such as a titanium sheet. When current is provided through the metal sheet, cracks in the sheet manifest themselves thermally as areas of localized heat increases such as at the terminus points of a crack running perpendicular to the current flow. Thus, in this application, defects are anomalous areas of higher heat.

Similarly, where metal structures are brazed onto a metal sheet, the integrity of the weld can be tested using the system of the present invention. By running the current through the metal sheet, the metal structure brazed to the metal sheet will operate as a heat sink. This will be observed as a cold shadow in a thermal image of the side of the metal sheet opposite the metal structure. Flaws in the integrity of the brazing will appear as hot spots in the cold shadow areas.

The system of the current invention can be implemented utilizing at least to some extent, test equipment already existing in many test facilities. Particularly, many test facilities utilize magnetic particle test machines to detect cracks in ferrous metal parts. These machines apply a large current across a ferrous metal test part that is placed in a suspension of magnetic material. Magnetic flux densities increase at areas of cracks and thus the magnetic material congregates at these locations.

Because these magnetic particle test systems are already constructed to deliver large currents across test parts, one of ordinary skill should readily understand the use of these machines in the system of the present invention for testing non-ferrous conductive parts.

In an alternate embodiment of the invention, liquid crystal thermography can be used to observe the heat patterns of the test part subject to the ohmic heating. In this embodiment, liquid crystal thermographic sheets can be applied to the test part, such as by vacuum attachment, to provide a low cost detector. As current is supplied across the part, areas of localized heating will be observed as hot spots on the liquid crystal sheets. Depending on the range of temperature variation in the part under test, multiple liquid crystal sheet may need to be bonded together to provide a sufficient range of temperature variation to provide adequate testing.

The many features and advantages of the invention are apparent from the detailed specification, and thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A system for detecting thermal anomalies in a test part, comprising:
a first contact secured at a first location on the test part;
a second contact secured at a second location on the test part;
a current supplying means for supplying a current between said first and said second contacts through said test part; and
a detecting means for detecting a thermal image of the test part.

2. A system according to claim 1 wherein:
said current supplying means comprise current source; and
said detecting means comprise a camera.

3. The system of claim 2, wherein the current source is provided by a current transformer.

4. The system of claim 3, wherein the current transformer supplies an alternating current of between 5 and 8 amperes.

5. The system of claim 3, wherein the current transformer supplies a direct current of between 5 and 8 amperes.

6. The system according to any of claims 1-5, further comprising a video display device for displaying the thermal image of the test part.

7. The system of claim 6, wherein the camera also detects a visual image of the test part.

8. The system of claim 7, further comprising an image processor for overlaying said thermal image on said visual image of the test part.

9. The system of claim 7, further comprising an image processor for overlaying said thermal image of said test part onto a computer-aided design (CAD) drawing of the test part.

10. The system according to any of claims 1-9, wherein the detecting means is a first liquid crystal sheet attached to the test part.

11. The system of claim 10, wherein said first liquid crystal sheet is attached to the test part by vacuum.

12. The system of claim 10 or 11, wherein at least one second additional liquid crystal sheet, having a different temperature sensitivity than said first sheet, is also attached to the test part.

13. The system according to any of claims 1-12, wherein said current supply means is a magnetic particle machine.

14. A method of detecting thermal anomalies in a test part, comprising the steps of:
passing an electrical current through a test part to cause ohmic heating of the test part; and
detecting a thermal image of the test part.

15. The method of claim 14, using a system according to any of claims 1 - 14.
